# FASCICULE DE BREVET EUROPEEN

(11) **EP 3 700 125 B1**
(45) Date de publication et mention de la délivrance du brevet: **11.10.2023**
(21) Numéro de dépôt: 20156555.3
(22) Date de dépôt: 11.02.2020
(51) Int. Cl.: H04L 9/08

(54) **DISPOSITIF DE FONCTION PHYSIQUEMENT NON-CLONABLE À TRANSISTORS, ET PROCÉDÉ DE RÉALISATION**
VORRICHTUNG MIT EINER PHYSISCH NICHT KLONIERBAREN FUNKTION MIT TRANSISTOREN, UND HERSTELLUNGSVERFAHREN
PHYSICALLY NON-CLONABLE FUNCTION DEVICE WITH TRANSISTORS, AND METHOD FOR MANUFACTURING SAME

(30) Priorité: 22.02.2019 FR 1901792
(43) Date de publication de la demande: 26.08.2020
(73) Titulaire: STMicroelectronics (Crolles 2) SAS, 38920 Crolles (FR); STMicroelectronics (Rousset) SAS, 13790 Rousset (FR)
(72) Inventeur: LA ROSA, Francesco, 13790 ROUSSET (FR); MANTELLI, Marc, 13710 FUVEAU (FR); NIEL, Stephan, 38240 MEYLAN (FR); REGNIER, Arnaud, 84300 LES TAILLADES (FR)
(74) Mandataire: Casalonga

(56) Documents cités:
- MUDIT BHARGAVA ET AL: "A High Reliability PUF Using Hot Carrier Injection Based Response Reinforcement", IACR, INTERNATIONAL ASSOCIATION FOR CRYPTOLOGIC RESEARCH, vol. 20150505:192811, 5 mai 2015 (2015-05-05), pages 1-18, XP061018395,
- ISLAM MD NAZMUL ET AL: "On Enhancing Reliability of Weak PUFs via Intelligent Post-Silicon Accelerated Aging", IEEE TRANSACTIONS ON CIRCUITS AND SYSTEMS I: REGULAR PAPERS, IEEE, US, vol. 65, no. 3, 1 mars 2018 (2018-03-01), pages 960-969, XP011677945, ISSN: 1549-8328, DOI: 10.1109/TCSI.2017.2766073 [extrait le 2018-02-15]
- Christoph Bohm ET AL: "A Reliable Low-area Low-power PUF-based Key Generator", , 14 novembre 2016 (2016-11-14), XP055640814, Extrait de l'Internet: URL:https://upcommons.upc.edu/bitstream/ha ndle/2117/99214/FCTRU_2016_12_A_Reliable_L ow.pdf?sequence=1&isAllowed=y

## Description

Des modes de mise en oeuvre et de réalisation de l'invention concernent les fonctions physiquement non clonables (PUF : Physically Unclonable Function), en particulier dans des structures ayant des transistors.

Une fonction physiquement non clonable permet de générer automatiquement un code unique non prédictible qui dépend de caractéristiques physiques aléatoires. Ainsi, le clonage d'une telle fonction est très difficile voire impossible.

D'une part, il est souhaitable que les fonctions physiquement non clonables soient suffisamment robustes pour être invariables notamment dans temps, suite à des utilisations répétées, et en cas de variations de température. D'autre part, il est souhaitable que les variations aléatoires des caractéristiques physiques soient facilement identifiables pour distinguer sans équivoque différentes données. En outre, il est souhaitable que les réalisations de fonctions physiquement non clonables ne nécessitent pas ou peu d'étapes de fabrication dédiées.

Les codes uniques non-prédictibles comportent typiquement une suite de données aléatoires et sont principalement utilisés en tant que clés de chiffrement. Ces données sont typiquement secrètes.

Cela étant, il existe des techniques mettant en oeuvre notamment des microscopies capacitives à balayage (SCM : Scanning Capacitance Microscopy) ou des microscopies électroniques à balayage (SEM : Scanning Electronic Microscopy), capables d'extraire les données secrètes, c'est-à-dire capable de lire les données par mesure, inspection et/ou analyse.

C'est particulièrement le cas de structures classiques qui visent à bénéficier de robustesse dans la rétention des données et de lisibilité des données. En effet, les techniques classiques qui augmentent la capacité de rétention et de discrimination des données pour la lecture, augmentent généralement aussi la capacité de discrimination des données dans les techniques d'extractions.

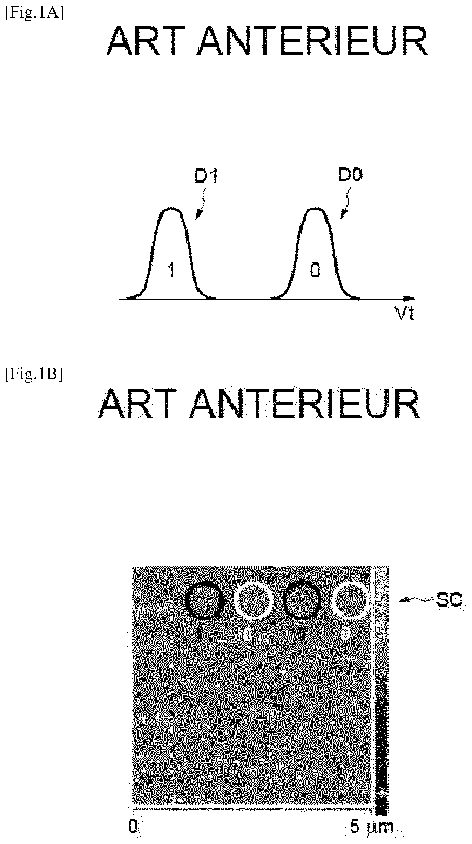

La figure 1A illustre une technique classique visant à bénéficier de robustesse dans la rétention des données et de lisibilité des données, dans laquelle des données sont matérialisées par des niveaux de tensions de seuil Vt de transistors. Des premiers transistors présentant une tension de seuil Vt appartenant à une distribution de niveau bas D1 permettent de matérialiser une première valeur logique, par exemple « 1 ». Des deuxièmes transistors présentant une tension de seuil Vt appartenant à une distribution de niveau haut D0 permettent de matérialiser une deuxième valeur logique, par exemple « 0 ».

La figure 1B illustre une image de microscopie capacitive à balayage SC de transistors stockant des données selon la technique présentée en relation avec la figure 1A. La suite de données 1010 stockée est facilement extractible si la position des transistors est connue. En effet, il est possible sur l'image SC de distinguer les régions de canal des premiers transistors (dont la tension de seuil appartient à la distribution de niveau bas D1) dans les cercles noirs, et des deuxièmes transistors (dont la tension de seuil appartient à la distribution de niveau haut D0) dans les cercles blancs. Cela est bien entendu problématique.

MUDIT BHARGAVA ET AL: "A High Reliability PUF Using Hot Carrier Injection Based Response Reinforcement", IACR, ePrint, vol. 20150505:192811, 05.05.2015

Il existe donc un besoin de proposer des structures de fonction physiquement non clonables robustes vis-à-vis de variations extérieures ou de vieillissement, dont les données sont clairement discriminables en lecture, tout en étant difficilement extractibles. Il serait en outre appréciable que les structures soient faciles à réaliser dans les technologies existantes.

Selon un aspect, il est proposé un dispositif de fonction physiquement non-clonable, comportant un ensemble de paires de transistors destinés à avoir une même tension de seuil mais présentant chacun une tension de seuil effective appartenant à une distribution aléatoire commune, un moyen de lecture différentielle configuré pour mesurer la différence entre les tensions de seuil effectives des paires de transistors et pour identifier des paires de transistors dites non fiables dont la différence entre les tensions de seuil effectives est inférieure à une valeur de marge, et un moyen d'écriture configuré pour décaler la tension de seuil effective d'un transistor de chaque paire non fiable, de façon contrôlée et limitée de sorte que la tension de seuil décalée reste à l'intérieur de ladite distribution aléatoire commune.

Ainsi, le dispositif selon cet aspect bénéficie des avantages du stockage de données par des transistors, c'est-à-dire de très bonnes capacités de rétention, robustes, et parfaitement maitrisés dans leurs fabrications et utilisations. Les tensions de seuil effectives appartenant toutes à une distribution aléatoire commune, la fonction est non seulement physiquement non clonable mais en outre impossible à extraire par les techniques de microscopie de l'art. Le décalage d'une tension de seuil effective dans les paires non fiables permet de garantir la viabilité de cette technique, notamment pour assurer la distinction entre deux tensions de seuil effectives éventuellement égales ou très proches initialement.

Les transistors peuvent être des transistors MOS (Métal Oxyde Silicium) comportant en particulier une grille et un diélectrique de grille, ou, selon une réalisation particulière, des transistors comportant une grille flottante et une grille de commande superposées et électriquement mutuellement couplées, et un diélectrique de grille. Le diélectrique de grille est avantageusement capable de piéger des charges par phénomène d'injection de porteurs chauds.

Selon un mode de réalisation, le moyen de lecture différentielle est en outre configuré pour lire un état logique d'une paire de transistors matérialisé par une différence entre les valeurs des tensions de seuil effectives de la paire supérieure à la valeur de marge.

Selon un mode de réalisation, le moyen d'écriture est configuré pour décaler la tension de seuil effective d'un transistor de chaque paire non fiable de façon à augmenter la différence entre les tensions de seuil effectives au-delà de la valeur de marge.

Selon un mode de réalisation, le moyen d'écriture est configuré pour décaler la tension de seuil effective d'un transistor en générant des conditions de phénomène d'injection de porteurs chauds, de façon à piéger des charges dans un diélectrique de grille du transistor.

Avantageusement, le moyen d'écriture, pour décaler la tension de seuil effective d'un transistor, est configuré pour générer une séquence d'impulsions d'écriture comprenant chacune lesdites conditions du phénomène d'injection de porteurs chauds.

Avantageusement, le moyen de lecture différentielle est configuré pour faire une vérification de marge entre certaines au moins desdites impulsions d'écriture, la vérification de marge comprenant une comparaison de la différence des valeurs des tensions de seuil effectives de la paire de transistors avec la valeur de marge.

Selon un mode de réalisation, les états logiques de l'ensemble de paires de transistors sont destinés à former une suite de données aléatoires.

Un circuit intégré peut comporter un dispositif de fonction physiquement non-clonable tel que défini selon ce dernier mode de réalisation, et un dispositif de chiffrement configuré pour chiffrer des données en utilisant une clé, la clé comprenant avantageusement ladite suite de données aléatoires.

Selon un autre aspect, il est proposé un procédé comprenant une réalisation d'une fonction physiquement non clonable, ladite réalisation comportant :
- une fabrication d'un ensemble de paires de transistors, destinés à avoir une même tension de seuil ;
- une dispersion aléatoire des valeurs effectives des tensions de seuil des transistors formant une distribution aléatoire commune des tensions de seuil des transistors ;
- une mesure de la différence entre les tensions de seuil effectives des paires de transistors, et une identification de paires de transistors dites non fiables dont la différence entre les tensions de seuil effectives est inférieure à une valeur de marge ;
- un décalage de la tension de seuil effective d'un transistor de chaque paire non fiable, de façon contrôlée et limitée de sorte que la tension de seuil décalée reste à l'intérieur de ladite distribution aléatoire commune.

Selon un mode de mise en oeuvre, le procédé comprend en outre une lecture d'un état logique d'une paire de transistors matérialisé par une différence entre les valeurs des tensions de seuil effectives de la paire supérieure à la valeur de marge.

Par exemple, le décalage comprend une augmentation de la différence entre les tensions de seuil effectives des transistors des paires non fiables au-delà de la valeur de marge.

Selon un mode de mise en oeuvre, ledit décalage de la tension de seuil effective d'un transistor comprend une génération de conditions de phénomène d'injection de porteurs chauds, et un piégeage des charges dans un diélectrique de grille du transistor.

Avantageusement, le décalage de la tension de seuil effective de l'un des transistors comprend une génération d'une séquence d'impulsions d'écriture comprenant chacune lesdites conditions du phénomène d'injection de porteurs chauds.

Avantageusement, ledit décalage comprend une vérification de marge entre certaines au moins des impulsions d'écriture, la vérification de marge comprenant une mesure de la différence des valeurs des tensions de seuil effectives de la paire de transistors et une comparaison de la différence mesurée avec la valeur de marge.

Selon un mode de mise en oeuvre, les états logiques de l'ensemble de paires de transistors sont destinés à former une suite de données aléatoires.

Un procédé de chiffrement peut avantageusement comporter un chiffrement de données utilisant une clé, la clé comprenant la suite de données aléatoires obtenue par un procédé tel que défini selon ce dernier mode de mise en oeuvre.

D'autres avantages et caractéristiques de l'invention apparaîtront à l'examen de la description détaillée de mode de mise en oeuvre et de réalisation, nullement limitatifs, et des dessins annexés sur lesquels :
[Fig 1A] précédemment décrite, illustre des caractéristiques de mémoires classiques ;
[Fig 1B] précédemment décrite, illustre des caractéristiques de mémoires classiques ;
[Fig 2] illustre un exemple de réalisation de l'invention ;
[Fig 3] illustre un exemple de réalisation de l'invention ;
[Fig 4] illustre un exemple de réalisation de l'invention ;
[Fig 5] illustre un exemple de réalisation de l'invention ;
[Fig 6] illustre un exemple de réalisation de l'invention ;
[Fig 7] illustre un exemple de réalisation de l'invention ;
[Fig 8] illustre un exemple de réalisation de l'invention ;
[Fig 9] illustre un exemple de mise en oeuvre de l'invention ;
[Fig 10] illustre un exemple de mise en oeuvre de l'invention ;
[Fig 11] illustre un exemple de réalisation de l'invention.

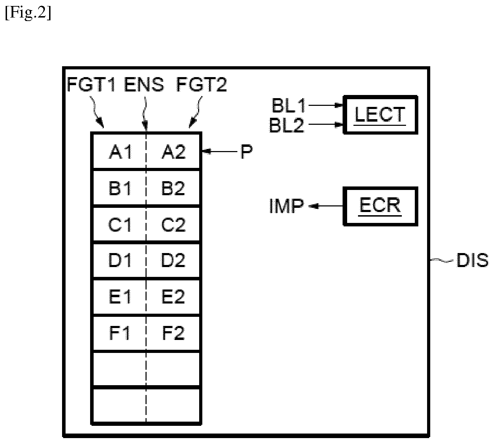

La figure 2 représente un exemple de réalisation d'un dispositif DIS de fonction physiquement non-clonable.

Le dispositif DIS comporte un ensemble ENS de paires P de transistors OTP1, OTP2.

Les transistors comportent classiquement une région de source et une région de drain implantées dans un corps semiconducteur, une région de canal dans le corps entre les régions de source et de drain, une région de grille conductrice électriquement isolée de la région de canal par un diélectrique de grille. Typiquement, le diélectrique de grille comprend une formation d'oxyde de silicium, ou éventuellement de nitrure de silicium.

Selon un exemple de réalisation, les transistors ont une structure de transistor à grille flottante (c'est-à-dire un transistor dont la région de grille comporte une grille flottante électriquement isolée de la région de canal et électriquement isolée d'une grille de commande qui la surmonte) dans lesquels la grille flottante et la grille de commande sont électriquement mutuellement connectées.

La tension de seuil d'un transistor est la tension entre la région de source et la grille de commande à partir de laquelle la région de canal est désertée et devient conductrice.

Un état logique peut être stocké dans un tel transistor en étant matérialisé par le niveau de la tension de seuil du transistor. Pour modifier le niveau de la tension de seuil d'un transistor réalisé, il est possible de piéger des charges dans le diélectrique de grille, en particulier par injection de porteurs chauds.

Les transistors OTP1, OTP2 de l'ensemble ENS sont destinés à présenter la même tension de seuil.

Cela étant, les tensions de seuil effectives, c'est-à-dire les valeurs réelles des tensions de seuil, varient légèrement suivant une dispersion aléatoire, par exemple due à des aléas physiques de fabrication. Ce type de dispersion est habituel et connu en soi. Les tensions de seuil effectives des transistors référencés OPT1 de chaque paire sont référencés A1-F1 et les tensions de seuil effectives des transistors référencés OPT2 de chaque paire sont référencés A2-F2.

Les transistors de l'exemple de réalisation selon une structure de transistor à grille flottante, les grilles étant électriquement reliées, présentent par nature une variabilité face à ces aléas plus importante et donc une distribution plus large que d'autres types de composants électroniques, par exemple des transistors MOS (Métal-Oxyde-Silicium) ou des résistances.

Ainsi, les transistors OTP1, OTP2 de l'ensemble ENS présentent chacun une tension de seuil effective A1-F1, A2-F2 appartenant à une distribution aléatoire commune.

En particulier, les transistors OTP1, OTP2 peuvent avantageusement être maintenus dans un état vierge, c'est-à-dire qu'aucun piégeage de charge n'est initialement réalisé dans leurs diélectriques de grille.

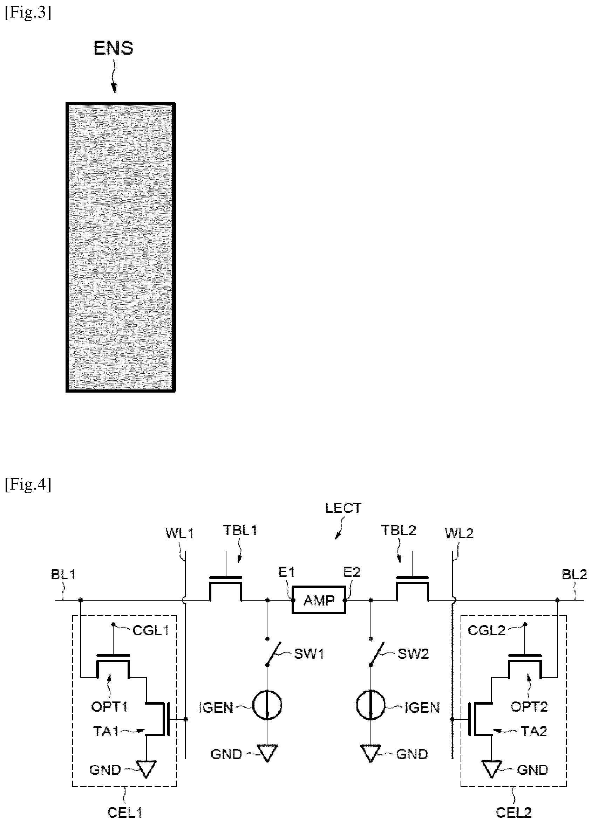

La figure 3 illustre une image de microscopie capacitive à balayage des transistors appartenant à l'ensemble ENS. Chaque transistor présente sa propre tension de seuil effective au sein d'une distribution de tensions de seuil Vteff de transistors vierges. Cela étant, aucune distinction des valeurs des tensions de seuil n'est possible sur cette image.

On se réfère à nouveau à la figure 2.

Le dispositif DIS comporte un moyen de lecture différentielle LECT configuré pour mesurer la différence entre les tensions de seuil effectives des paires P de transistors OTP1, OTP2.

Le moyen de lecture différentielle LECT comporte deux entrées différentielles auxquelles sont respectivement couplés les transistors OTP1, OTP2 de chaque paire P, notamment via des lignes de bits respectives BL1, BL2.

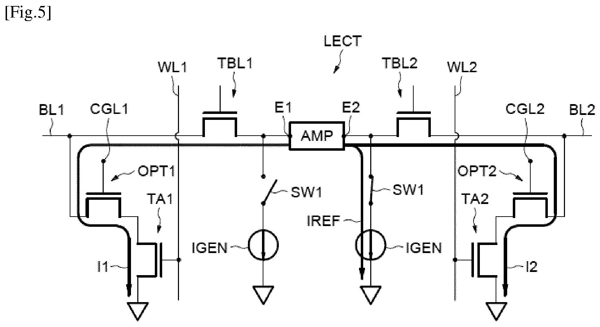

A cet égard, on se réfère désormais aux figures 4 et 5.

La figure 4 représente un exemple de réalisation du moyen de lecture différentielle LECT couplés aux transistors OTP1, OTP2 d'une paire, via les lignes de bits respectives BL1, BL2.

Dans cet exemple, les transistors OTP1, OTP2, appartiennent à des cellules mémoires respectives CEL1, CEL2, dans lesquelles un transistor d'accès TA1, TA2 est relié à la source du transistor OTP1, OTP2 sur son drain et à la masse GND sur sa source.

Les transistors d'accès TA1, TA2 sont commandés sur leurs grilles par un signal transmis sur une ligne de mot respective WL1 WL2. Comme il apparaîtra dans la suite, les lignes de mots WL1, WL2 peuvent éventuellement être communes à une paire, c'est-à-dire reliées électriquement, voire formées par une même ligne électriquement conductrice.

Les grilles des transistors OTP1, OTP2 sont reliées à une ligne de commande de grille respective CGL1, CGL2. De même, les lignes de commande de grille CGL1, CGL2 peuvent éventuellement être communes à une paire de transistors, c'est-à-dire reliées électriquement, voire formées par une même ligne électriquement conductrice.

Les drains des transistors OTP1, OTP2 sont quant à eux reliés à une ligne de bit respective BL1, BL2.

La ligne de bit BL1 permet de coupler l'un des transistors OTP1 de la paire à une première entrée E1 d'un amplificateur de lecture AMP. La ligne de bits BL2 permet de coupler l'autre transistor OTP2 de la paire à une deuxième entrée E2 de l'amplificateur de lecture AMP.

Les autres transistors de l'ensemble ENS de paires P sont couplés à l'amplificateur de lecture AMP de la même manière, et des commutateurs d'entrée respectifs TBL1, TBL2 permettent de sélection les lignes de bits BL1, BL2 des paires voulues en entrées E1, E2.

En outre, le moyen de lecture LECT comporte des générateurs de courant de référence IGEN générant un courant de référence IREF tiré sur la première entrée E1 ou la deuxième entrée E2, selon des positions d'interrupteurs respectifs SW1, SW2.

La figure 5 représente un exemple de réalisation du moyen de lecture différentielle LECT en fonctionnement.

L'amplificateur de lecture AMP est configuré pour amplifier une différence entre le courant écoulé sur sa première entrée E1, et le courant écoulé sur sa deuxième entrée E2.

A cet égard, les commutateurs d'entrée TBL1, TBL2 sont commandés de façon à connecter les lignes de bits BL1, BL2 de la paire de transistors souhaitée.

Le transistor d'accès TA1, TA2 de chaque transistor OTP1, OTP2 est commandé passant par une tension transmise sur les lignes de mots WL1, WL2. De même, les transistors OTP1, OTP2 sont commandés par une tension de commande transmise sur les lignes de commande de grille CGL1, CGL2.

Le transistor OTP1 de la paire est ainsi disposé à écouler un courant de lecture I1 de la première entrée E1 vers la masse GND. L'autre transistor OTP2 de la paire est de même disposé à écouler un courant de lecture I2 de la deuxième entrée E2 vers la masse GND.

Le courant de lecture I1, I2 étant représentatif de la tension de seuil effective du transistor respectif OTP1, OTP2, la différence des courants I1, I2 est représentative de la différence entre les tensions de seuil effectives des paires de transistors OTP1, OTP2.

Ainsi, le moyen de lecture différentielle LECT est capable de mesurer la différence entre les tensions de seuil effectives des paires de transistors OTP1, OTP2.

En outre, un courant supplémentaire IREF, généré par l'un des générateurs de courant de référence IGEN, peut être ajouté à l'un des courants I1, I2 écoulés sur les entrées E1, E2 via la commande des interrupteurs SW1, SW2. Dans l'exemple représenté, l'interrupteur SW2 est fermé et le courant IREF est ajouté au courant I2 sur la deuxième entrée E2.

Cela permet de mesurer une différence entre les tensions de seuil effectives à partir d'une certaine marge. La valeur de la marge correspond au courant IREF, représentatif d'un écart de tension de référence.

La valeur de marge est choisie notamment en fonction de la précision du moyen de lecture différentielle LECT.

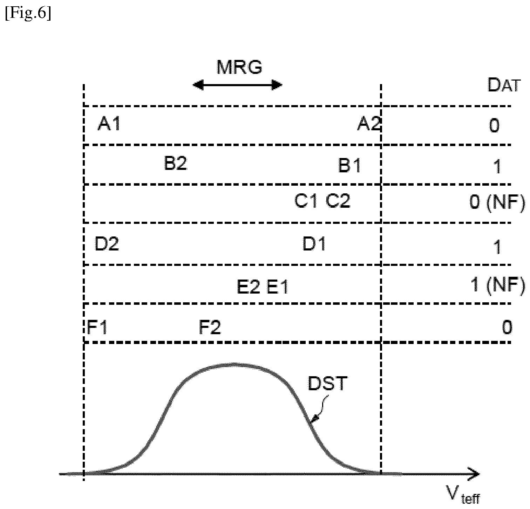

On se réfère désormais à la figure 6.

La figure 6 représente un exemple de différentes valeurs de tensions de seuils A1, B1, C1, D1, E1, F1 de l'un des transistors OTP1 de chaque paire de l'ensemble ENS, et les valeurs des tensions de seuil A2, B2, C2, D2, E2, F2 de l'autre transistor OTP2 respectif de chaque paire.

Les valeurs A1-F1, A2-F2 appartiennent toutes à la distribution aléatoire commune DST de tensions de seuil effectives Vteff.

Le moyen de lecture différentielle LECT selon un exemple de réalisation, par exemple tel que décrit en référence aux figures 4 et 5, est aussi configuré pour lire un état logique DAT de chaque paire de transistors OTP1, OTP2. L'état logique DAT est matérialisé par la différence entre les valeurs des tensions de seuil effectives de la paire supérieure à la valeur de marge MRG.

Par exemple, si X1>X2+MRG, alors DAT=1, et si X2>X1+MRG, alors DAT=0, avec X1 l'une quelconque des valeurs A1-F2 et respectivement X2.

Ainsi, des états logiques sont obtenus de façon physiquement non clonable par l'écart aléatoire des valeurs des tensions de seuil effectives des deux transistors d'une paire. Etant donné que ces tensions de seuil effectives sont proches et appartiennent à la distribution aléatoire commune DST, il est impossible par inspections microscopiques de discriminer deux données stockées.

On remarquera sur la figure que certains couples de valeurs de tensions de seuil, C1 C2 et E1 E2, peuvent être proches au point de présenter un écart inférieur à la valeur de marge MRG. Les paires de transistors présentant ces couples de valeurs sont dites non fiables NF.

On se réfère à nouveau à la figure 2.

Le moyen de lecture différentielle LECT est configuré pour identifier des paires P de transistors dites non fiables NF, par exemple selon une mesure différentielle telle que décrite ci-avant en relation avec les figures 4 et 5. Une paire P de transistors OTP1, OTP2 est dite non fiable si la différence entre les tensions de seuil effectives des transistors est inférieure à une valeur de marge, par exemple telle que la valeur de marge MRG décrite ci-avant en relation avec les figures 4 et 5.

Le dispositif DIS comporte enfin un moyen d'écriture ECR capable notamment de générer des impulsions d'écritures IMP.

Les impulsions d'écriture IMP peuvent comportent une application d'une différence de potentiel entre la grille et le drain des transistors suffisante pour injecter des charges dans le diélectrique de grille, par phénomène d'injection de porteurs chauds.

Les phénomènes d'injection par porteurs chauds sont bien connus de l'homme de l'art. Sommairement, des conditions entraînant ce phénomène peuvent être obtenues en appliquant des hautes tensions dans les régions de drain et de grille du transistor. On parle aussi de stress appliqué sur le diélectrique de grille. Par exemple, l'application d'une tension de drain V_{D}=4,5V et d'une tension de grille V_{G}=8V permet de piéger des charges négatives dans un diélectrique de grille en dioxyde de silicium SiO₂ par injection de porteurs chauds. Le piégeage de charges négatives dans le diélectrique de grille introduit une augmentation de la valeur de la tension de seuil du transistor.

Aussi, contrairement aux techniques classiques qui créent deux populations de transistors dont les tensions de seuil sont rigoureusement distinctes (par exemple tel qu'illustré par la figure 1A), les impulsions d'écriture IMP sont contrôlées et limitées et permettent de décaler la tension de seuil de façon suffisamment légère pour pouvoir considérer raisonnablement que la nouvelle tension de seuil décalée appartient à la même distribution aléatoire commune.

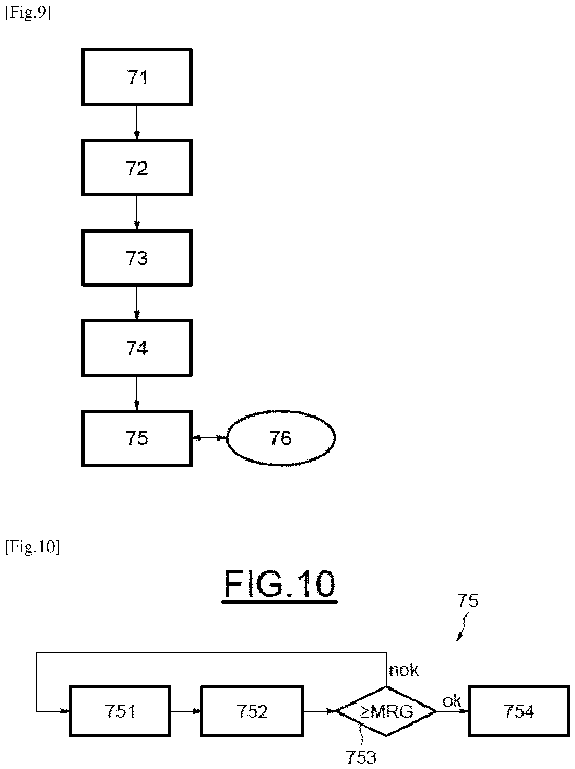

Le moyen d'écriture ECR, éventuellement en collaboration avec le moyen de lecture LECT, peut selon un exemple de réalisation être configuré pour générer les impulsions d'écriture selon la mise en oeuvre décrite ci-après en relation avec la figure 10.

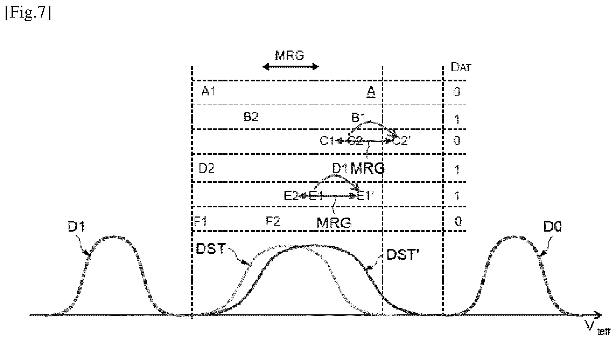

On se réfère à cet égard à la figure 7.

La figure 7 reprend l'exemple représenté en figure 6, dans lequel les tensions de seuil effectives C2 et E1 de l'un des transistors de chaque paire non fiables NF ont été décalées à des valeurs décalées C2', E1'.

Le moyen d'écriture ECR est configuré pour décaler la tension de seuil effective C2, E1 d'un transistor de chaque paire non fiable NF de façon à augmenter la différence entre les tensions de seuil effectives au-delà de la valeur de marge MRG.

Cela permettra de pouvoir lire, de façon fiable dans les paires identifiées non fiables NF, un état logique DAT matérialisé par une différence entre les valeurs des tensions de seuil effectives de la paire supérieure à la valeur de marge MRG.

Bien entendu, d'un point de vue théorique, cela implique une légère modification de la distribution DST initiale en une distribution décalée DST'. Cela étant il est raisonnable de considérer que les valeurs décalées C2' et E1' appartiennent à la distribution initiale, c'est-à-dire la distribution aléatoire commune DST obtenue à la fabrication. En effet, en comparaison avec des distributions de tensions de seuil de niveau bas D1 et de niveau haut D0 (correspondant également à la figure 1A), les distributions DST et DST' sont très similaires et considérées identiques.

En d'autres termes, le moyen d'écriture ECR est configuré pour décaler la tension de seuil effective d'un transistor de chaque paire non fiable NF, de façon contrôlée et limitée à l'intérieur de ladite distribution aléatoire commune DST.

En tout état de cause, on considère que les valeurs des tensions de seuil décalées sont situées à l'intérieur de la distribution aléatoire commune DST tant qu'il est impossible de les distinguer par des techniques de microscopie à balayage.

Les populations de transistors des distributions de tensions de seuil de niveau bas D1 et de niveau haut D0 peuvent être distinguées au microscope à balayage, mais il est impossible de faire la distinction entre les populations de transistors des distributions initiale DST et décalée DST'.

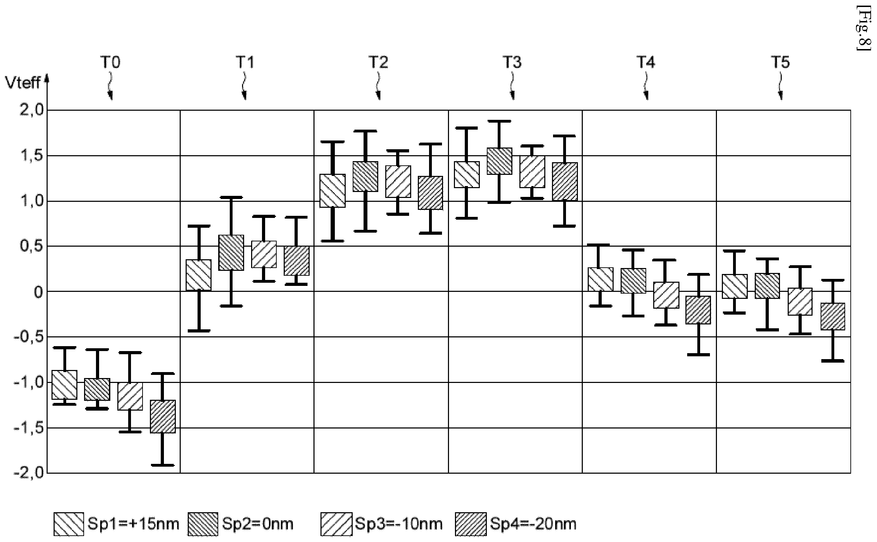

La figure 8 est un diagramme en boîtes représentant des résultats de valeurs de tensions de seuil, selon des décalages effectués dans différentes conditions.

Les boîtes du diagramme sont délimitées par les valeurs du premier quartile et troisième quartile et sont coupées par la médiane. Les segments aux extrémités s'étendent jusqu'aux valeurs extrêmes, éventuellement ôtées des données aberrantes.

Les résultats de mesures de tensions de seuil Vteff sont présentés pour quatre populations de transistors Sp1, Sp2, Sp3, Sp4, par des boîtes respectives, et suivant six contextes de mesures T0, T1, T2, T3, T4, T5.

Les populations Sp1, Sp2, Sp3, Sp4 correspondent à des variantes structurelles des transistors.

Le contexte de mesure T0 correspond à des états initiaux des réalisations de transistors.

A l'état initial, chaque population présente des tensions de seuil effectives Vteff dispersées selon une distribution aléatoire, autour de -1,0V à -1,5V.

Le contexte de mesure T1 correspond à des transistors ayant été mis sous un stress de tension pendant 0,1 seconde. Les conditions de stress de tension permettent l'apparition du phénomène d'injection de porteurs chauds dans les diélectriques de grille des transistors. Ainsi des charges sont piégées dans le diélectrique de grille et la tension de seuil effective du transistor est décalée.

Les conditions de stress correspondent par exemple à une tension de drain V_{D}=4,5V et une tension de grille V_{G}=8V. Dans l'exemple de réalisation décrits ci avant en relation avec les figures 4 et 5, une tension de 1V est appliquée à la grille des transistors TA afin de placer les transistors TA à saturation et obtenir des conditions de stress optimales, notamment en matière de population de porteurs chauds dans les régions de drains des transistors TA. Les tensions de seuil décalées dans ces conditions sont centrées autour de 0,0V à 0,5V.

Les contextes de mesure T2 et T3 correspondent aux mêmes conditions de stress pendant des durées respectives de 1,0 s et 2,0 s.

Les valeurs mesurées montrent un décalage supplémentaire de la tension de seuil suite à 1 seconde de stress, sensiblement autour de 1,0V à 1,5V ; et pas d'évolution notable de 1 seconde à 2 secondes de stress.

Les contextes de mesure T4 et T5 correspondent aux transistors ayant été mis sous conditions de stress selon les contextes T2 ou T3, et après des recuit respectifs de 24h et de 72h.

Les valeurs mesurées dans les contextes T4 et T5 sont très similaires, et montrent que les valeurs après recuit sont plus homogènes et ont diminuées. Cela étant la diminution des valeurs ne traduit pas un rétablissement aux valeurs de tensions de seuil initiales, et restent décalées par rapport à ces dernières. Les valeurs des tensions de seuil après recuit sont centrées autour de sensiblement -0,5V à 0,0V.

Les contextes de mesures présentés en relation avec la figure 8 sont des mesures expérimentales représentatives du comportement général des transistors face à des conditions de stress.

Bien entendu, les décalages des tensions de seuil effectives mis en oeuvre par le moyen d'écriture ECR de façon contrôlée et limitée à l'intérieur de ladite distribution aléatoire commune DST, sont moins importants que ces mesures expérimentales.

La figure 9 représente un exemple de mise en oeuvre d'un procédé comportant notamment une réalisation de fonction physiquement non clonable. Certaines références se rapportent aux figures 2 à 8 précédemment décrites.

Le procédé comprend une étape 71 de fabrication d'un ensemble ENS de paires P de transistors OTP1, OTP2. La fabrication des transistors est identique de sorte que les transistors fabriqués sont destinés à avoir une même tension de seuil.

Le procédé comprend une dispersion aléatoire 72 des valeurs effectives des tensions de seuil Vteff des transistors. La dispersion est notamment due à des aléas physiques de fabrication, et ainsi directement accomplie, au moins en partie, lors de l'étape de fabrication 71. La dispersion des valeurs effectives forme une distribution aléatoire commune DST des tensions de seuil des transistors de l'ensemble ENS.

Il pourrait être envisagé de mettre en oeuvre, lors d'une étape dédiée ou lors de l'étape de fabrication 71, des conditions intensifiant la dispersion aléatoire des tensions de seuil.

Le procédé comprend une étape 73 de mesure de la différence entre les tensions de seuil effectives Vteff des paires de transistors, et une identification 74 de paires de transistors dites non fiables NF dont la différence entre les tensions de seuil effectives est inférieure à une valeur de marge MRG.

Enfin, le procédé comprend un décalage 75 de la tension de seuil effective d'un transistor de chaque paire non fiable NF, de façon contrôlée et limitée à l'intérieur de ladite distribution aléatoire commune DST.

Le décalage 75 est mis en oeuvre de façon à augmenter la différence entre les tensions de seuil effectives des transistors des paires non fiables NF, au-delà de la valeur de marge MRG.

On se réfère à la figure 10, illustrant un exemple de mise en oeuvre du décalage 75.

Dans cet exemple, le décalage 75 de la tension de seuil effective comprend une séquence d'impulsions d'écriture 751.

Chaque impulsion d'écriture 751 comprend une mise en place de conditions d'obtention d'un phénomène d'injection de porteurs chauds, afin de piéger des charges dans la grille flottante du transistor dont la tension de seuil est décalée.

Dans la séquence, une vérification de marge (752, 753) est faite entre certaines au moins des impulsions d'écriture 751. La vérification de marge comprend une mesure 752 de la différence des valeurs des tensions de seuil effectives de la paire de transistors, après la ou les impulsion(s) d'écriture 751, et puis une comparaison 753 de la différence mesurée avec la valeur de marge MRG.

Si la différence mesurée 752 est inférieure à la valeur de marge MRG (nok), alors un nouveau cycle comprenant une impulsion d'écriture 751 et une vérification de marge 752, 753 est ajouté à la séquence.

Lorsque la différence mesurée 752 est supérieure ou égale à la valeur de marge MRG (ok), alors le décalage 75 prend fin 754. Grâce aux vérifications de marge 752, 753 dans la séquence d'impulsions d'écriture 751, les tensions de seuil ont été décalées de façon contrôlée et limitée afin de pas aboutir à des valeurs de tensions de seuil situées en dehors de la distribution aléatoire commune DST obtenue à la fabrication.

On se réfère à nouveau à la figure 9.

Le procédé comprendre en outre une étape 76 de lecture d'un état logique DAT d'une paire de transistors matérialisé par une différence entre les valeurs des tensions de seuil effectives Vteff, supérieure à la valeur de marge MRG.

Les états logiques DAT, ainsi formés dans l'ensemble ENS de paires P de transistors OTP1, OTP2 peuvent par exemple être destinés à former une suite de données aléatoires.

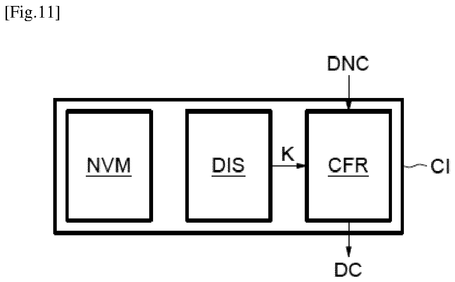

La figure 11 représente un circuit intégré CI comportant un dispositif de fonction physiquement non-clonable DIS tel que décrit précédemment en relation avec les figures 2 à 8, par exemple obtenu par un procédé tel que décrit ci-avant en relation avec les figures 9 et 10.

Dans le dispositif DIS, les états logiques DAT de l'ensemble ENS de paires P de transistors OTP1, OTP2 sont donc destinés à former une suite de données aléatoires.

Dans cet exemple, le circuit intégré CI est capable d'exécuter un procédé de chiffrement comportant un chiffrement CFR de donnée DNC utilisant une clé K, la clé K comprenant la suite de données aléatoires formée et stockée dans l'ensemble ENS de paires de transistors.

Un moyen de chiffrement CFR, incorporé au circuit intégré CI, est configuré pour chiffrer les données DNC en utilisant la clé K.

En outre, le circuit intégré CI peut comporter une mémoire non volatile NVM, comportant des cellules mémoires ayant chacune un transistor à grille flottante, avantageusement fabriqué au cours de la même étape 71 de fabrication de l'ensemble ENS de paires P de transistors OTP1, OTP2. Dans ce cas, les transistors OPT1, OPT2 dans des paires P de l'ensemble ENS sont obtenus par une connexion électrique subséquente des grilles flottantes avec les grilles de commande des structures de transistor à grille flottante ainsi fabriquées.

En résumé il a été présenté une technique de fonction physiquement non clonable, dans laquelle un état logique est défini par la différence relative entre deux informations appartenant à une même distribution. Les données ne peuvent pas être récupérées par des méthodologies de l'art connu : ni la microscopie capacitive à balayage (SCM), ni la microscopie électronique à balayage (SEM). La technique ne nécessite pas nécessairement de processus spécifiques et dédiés.

Par ailleurs l'invention n'est pas limitée à ces modes de réalisation mais en embrasse toutes les variantes, par exemple, les exemples de réalisation décrits ci-avant en relation avec les figures 4 et 5 bien qu'ayant trait à un amplificateur de lecture différentielle en courant, la lecture différentielle peut être faite en tension, ou encore le sens du décalage illustré par les figures 6 et 7, bien que représenté dans le sens croissant, peut aussi être décroissant selon une injection de charges de signe opposé.

## Revendications

1. Dispositif (DIS) de fonction physiquement non-clonable, comportant un ensemble (ENS) de paires (P) de transistors (OTP1, OTP2) destinés à avoir une même tension de seuil mais présentant chacun une tension de seuil effective (Vteff) appartenant à une distribution aléatoire commune (DST), des états logiques étant obtenus de façon physiquement non clonable par l'écart aléatoire des valeurs des tensions de seuil effectives des deux transistors d'une paire, un moyen de lecture différentielle (LECT) configuré pour mesurer la différence entre les tensions de seuil effectives (Vteff) des paires (P) de transistors (OTP1, OTP2) et pour identifier des paires de transistors dites non fiables (NF) dont la différence entre les tensions de seuil effectives est inférieure à une valeur de marge (MRG), et un moyen d'écriture (ECR) configuré pour décaler la tension de seuil effective (C2, E1) d'un transistor de chaque paire non fiable (NF), de façon contrôlée et limitée de sorte que la tension de seuil décalée reste à l'intérieur de ladite distribution aléatoire commune (DST) et de façon à augmenter la différence entre les tensions de seuil effectives au-delà de la valeur de marge (MRG).

2. Dispositif selon la revendication 1, dans lequel le moyen de lecture différentielle (LECT) est en outre configuré pour lire un état logique (DAT) d'une paire de transistors matérialisé par une différence entre les valeurs des tensions de seuil effectives de la paire supérieure à la valeur de marge (MRG).

3. Dispositif selon l'une des revendications précédentes, dans lequel le moyen d'écriture (ECR) est configuré pour décaler la tension de seuil effective (C2, E1) d'un transistor en générant des conditions de phénomène d'injection de porteurs chauds, de façon à piéger des charges dans un diélectrique de grille du transistor (OTP1, OTP2).

4. Dispositif selon la revendication 3, dans lequel le moyen d'écriture (ECR), pour décaler la tension de seuil effective (C2, E1) d'un transistor, est configuré pour générer une séquence d'impulsions d'écriture (751) comprenant chacune lesdites conditions du phénomène d'injection de porteurs chauds.

5. Dispositif selon la revendication 4, dans lequel le moyen de lecture différentielle (LECT) est configuré pour faire une vérification de marge (752, 753) entre certaines au moins desdites impulsions d'écriture (751), la vérification de marge comprenant une comparaison (753) de la différence des valeurs des tensions de seuil effectives (752) de la paire de transistors avec la valeur de marge (MRG).

6. Dispositif selon l'une des revendications précédentes prise en combinaison avec la revendication 2, dans lequel les états logiques (DAT) de l'ensemble (ENS) de paires de transistors sont destinés à former une suite de données aléatoires.

7. Circuit intégré (CI), comportant un dispositif (DIS) de fonction physiquement non-clonable selon la revendication 6 et un dispositif de chiffrement (CFR) configuré pour chiffrer des données (DNC) en utilisant une clé (K), la clé (K) comprenant ladite suite de données aléatoires.

8. Procédé comprenant une réalisation d'une fonction physiquement non clonable, ladite réalisation comportant :
- une fabrication (71) d'un ensemble (ENS) de paires (P) de transistors (OTP1, OTP2), destinés à avoir une même tension de seuil ;
- une dispersion aléatoire (72) des valeurs effectives des tensions de seuil (Vteff) des transistors formant une distribution aléatoire commune (DST) des tensions de seuil des transistors, des états logiques étant obtenus de façon physiquement non clonable par l'écart aléatoire des valeurs des tensions de seuil effectives des deux transistors d'une paire ;
- une mesure (73) de la différence entre les tensions de seuil effectives (Vteff) des paires de transistors, et une identification (74) de paires de transistors dites non fiables (NF) dont la différence entre les tensions de seuil effectives est inférieure à une valeur de marge (MRG) ;
- un décalage (75) de la tension de seuil effective (C2, E1) d'un transistor de chaque paire non fiable (NF), de façon contrôlée et limitée de sorte que la tension de seuil décalée reste à l'intérieur de ladite distribution aléatoire commune (DST) et de façon à augmenter la différence entre les tensions de seuil effectives au-delà de la valeur de marge (MRG).

9. Procédé selon la revendication 8, comprenant en outre une lecture (76) d'un état logique (DAT) d'une paire de transistors matérialisé par une différence entre les valeurs des tensions de seuil effectives (Vteff) de la paire supérieure à la valeur de marge (MRG).

10. Procédé selon l'une des revendications 8 ou 9, dans lequel ledit décalage (71) de la tension de seuil effective (C2, E1) d'un transistor comprend une génération de conditions de phénomène d'injection de porteurs chauds, et un piégeage des charges dans un diélectrique de grille du transistor (OTP1, OTP2).

11. Procédé selon la revendication 10, dans lequel ledit décalage (75) de la tension de seuil effective de l'un des transistors comprend une génération d'une séquence d'impulsions d'écriture (751) comprenant chacune lesdites conditions du phénomène d'injection de porteurs chauds.

12. Procédé selon la revendication 11, dans lequel ledit décalage (75) définitif comprend une vérification de marge (752, 753) entre certaines au moins des impulsions d'écriture (751), la vérification de marge comprenant une mesure (752) de la différence des valeurs des tensions de seuil effectives de la paire de transistors et une comparaison (753) de la différence mesurée avec la valeur de marge (MRG).

13. Procédé selon l'une des revendications 8 à 12 prise en combinaison avec la revendication 10, dans lequel les états logiques (DAT) de l'ensemble (ENS) de paires de transistors sont destinés à former une suite de données aléatoires.

14. Procédé de chiffrement comportant un chiffrement (CFR) de données (DNC) utilisant une clé (K), la clé (K) comprenant une suite de données aléatoires, le procédé de chiffrement comprenant l'obtention de la suite de données aléatoires par un procédé de fonction physiquement non-clonable selon la revendication 13.

## Patentansprüche

1. Vorrichtung (DIS) mit einer physisch nicht klonbaren Funktion, eine Einheit (ENS) an Paaren (P) von Transistoren (OPT1, OPT2) beinhaltend, die dazu bestimmt sind, eine selbe Schwellenspannung aufzuweisen, die aber jeweils eine wirksame Schwellenspannung (Vteff) aufweisen, die einer gemeinsamen zufälligen Verteilung (DST) angehört, wobei logische Zustände physisch nicht klonbar durch die zufällige Abweichung der Werte der wirksamen Schwellenspannungen der beiden Transistoren eines Paares erhalten werden, ein Differenzlesemittel (LECT), konfiguriert, um die Differenz zwischen den wirksamen Schwellenspannungen (Vteff) der Paare (P) an Transistoren (OPT1, OPT2) zu messen, und um sogenannte nicht zuverlässige Transistorpaare (NF) zu identifizieren, deren Differenz zwischen den wirksamen Schwellenspannungen geringer als ein Margenwert (MRG) ist, und ein Schreibmittel (ECR), konfiguriert, um die wirksame Schwellenspannung (C2, E1) eines Transistors eines jeden nicht zuverlässigen Paares (NF) kontrolliert und begrenzt zu verschieben, sodass die verschobene Schwellenspannung innerhalb der gemeinsamen zufälligen Verteilung (DST) verbleibt, und um die Differenz zwischen den wirksamen Schwellenspannungen über den Margenwert (MRG) hinaus zu erhöhen.

2. Vorrichtung nach Anspruch 1, wobei das Differenzlesemittel (LECT) weiter konfiguriert ist, um einen logischen Zustand (DAT) eines Transistorpaares zu lesen, der durch eine Differenz zwischen den Werten der wirksamen Schwellenspannungen des Paares vergegenständlicht ist, die größer als der Margenwert (MRG) ist.

3. Vorrichtung nach einem der vorstehenden Ansprüche, wobei das Schreibmittel (ECR) konfiguriert ist, um die wirksame Schwellenspannung (C2, E1) eines Transistors zu verschieben, indem Bedingungen eines Phänomens einer Heißträgerinjektion generiert werden, um Ladungen in einem Gate-Dielektrikum des Transistors (OPT1, OPT2) einzuschließen.

4. Vorrichtung nach Anspruch 3, wobei das Schreibmittel (ECR) zum Verschieben der wirksamen Schwellenspannung (C2, E1) eines Transistors konfiguriert ist, um eine Folge von Schreibimpulsen (751) zu generieren, die jeweils die Bedingungen des Phänomens einer Heißträgerinjektion umfassen.

5. Vorrichtung nach Anspruch 4, wobei das Differenzlesemittel (LECT) konfiguriert ist, um eine Margenüberprüfung (752, 753) mindestens unter bestimmten der Schreibimpulse (751) durchzuführen, wobei die Margenüberprüfung einen Vergleich (753) der Differenz der Werte der wirksamen Schwellenspannungen (752) des Transistorpaares mit dem Margenwert (MRG) umfasst.

6. Vorrichtung nach einem der vorstehenden Ansprüche, in Kombination mit Anspruch 2, wobei die logischen Zustände (DAT) der Einheit (ENS) an Transistorpaaren dazu bestimmt sind, eine Folge von Zufallsdaten zu bilden.

7. Integrierte Schaltung (CI), eine Vorrichtung (DIS) mit einer physisch nicht klonbaren Funktion nach Anspruch 6, und eine Chiffriervorrichtung (CFR) beinhaltend, konfiguriert, um Daten (DNC) durch Verwenden eines Schlüssels (K) zu chiffrieren, wobei der Schlüssel (K) die Folge von Zufallsdaten umfasst.

8. Verfahren, umfassend eine Ausführung einer physisch nicht klonbaren Funktion, wobei die Ausführung Folgendes beinhaltet:
- Herstellung (71) einer Einheit (ENS) an Paaren (P) von Transistoren (OPT1, OPT2), die dazu bestimmt sind, eine selbe Schwellenspannung aufzuweisen;
- zufällige Streuung (72) der wirksamen Werte der Schwellenspannungen (Vteff) der Transistoren, die eine gemeinsame zufällige Verteilung (DST) der Schwellenspannungen der Transistoren bilden, wobei logische Zustände physisch nicht klonbar durch die zufällige Abweichung der Werte der wirksamen Schwellenspannungen der beiden Transistoren eines Paares erhalten werden;
- Messung (73) der Differenz zwischen den wirksamen Schwellenspannungen (Vteff) der Transistorpaare, und eine Identifizierung (74) der sogenannten nicht zuverlässigen Transistorpaare (NF), deren Differenz zwischen den wirksamen Schwellenspannungen geringer als ein Margenwert (MRG) ist;
- kontrolliert und begrenzt Verschieben (75) der wirksamen Schwellenspannung (C2, E1) eines Transistors eines jeden nicht zuverlässigen Paares (NF), sodass die verschobene Schwellenspannung innerhalb der gemeinsamen zufälligen Verteilung (DST) verbleibt, und um die Differenz zwischen den wirksamen Schwellenspannungen über den Margenwert (MRG) hinaus zu erhöhen.

9. Verfahren nach Anspruch 8, weiter ein Lesen (76) eines logischen Zustandes (DAT) eines Transistorpaares umfassend, der durch eine Differenz zwischen den Werten der wirksamen Schwellenspannungen (Vteff) des Paares vergegenständlicht ist, die größer als der Margenwert (MRG) ist.

10. Verfahren nach einem der Ansprüche 8 oder 9, wobei der Versatz (71) der wirksamen Schwellenspannung (C2, E1) eines Transistors ein Generieren von Bedingungen eines Phänomens einer Heißträgerinjektion, und ein Einschließen der Lasten in einem Gate-Dielektrikum des Transistors (OPT1, OPT2) umfasst.

11. Verfahren nach Anspruch 10, wobei der Versatz (75) der wirksamen Schwellenspannung des einen der Transistoren ein Generieren einer Folge von Schreibimpulsen (751) umfasst, die jeweils die Bedingungen des Phänomens einer Heißträgerinjektion umfassen.

12. Verfahren nach Anspruch 11, wobei der endgültige Versatz (75) eine Margenüberprüfung (752, 753) mindestens unter bestimmten der Schreibimpulse (751) umfasst, wobei die Margenüberprüfung eine Messung (752) der Differenz der Werte der wirksamen Schwellenspannungen des Transistorpaares mit schwebendem Gate, und einen Vergleich (753) der gemessenen Differenz mit dem Margenwert (MRG) umfasst.

13. Verfahren nach einem der Ansprüche 8 bis 12, in Kombination mit Anspruch 10, wobei die logischen Zustände (DAT) der Einheit (ENS) an Transistorpaaren dazu bestimmt sind, eine Folge von Zufallsdaten zu bilden.

14. Chiffrierverfahren, ein Chiffrieren (CFR) von Daten (DNC) beinhaltend, welches einen Schlüssel (K) verwendet, wobei der Schlüssel (K) eine Folge von Zufallsdaten umfasst, wobei das Chiffrierverfahren den Erhalt der Folge von Zufallsdaten durch ein Verfahren einer physisch nicht klonbaren Funktion nach Anspruch 13 umfasst.

## Claims

1. A physically unclonable function device (DIS), including a set (ENS) of pairs (P) of transistors (OTP1, OTP2) intended to have the same threshold voltage but each having an effective threshold voltage (Vteff) belonging to a common random distribution (DST), logic states being obtained in a physically unclonable way by the random deviation of the values of the effective threshold voltages of the two transistors of a pair, a differential read means (LECT) configured to measure the difference between the effective threshold voltages (Vteff) of the pairs (P) of transistors (OTP1, OTP2) and to identify pairs of transistors called unreliable transistors (NF) whose difference between the effective threshold voltages is less than a margin value (MRG), and write means (ECR) configured to shift the effective threshold voltage (C2, El) of one transistor of each unreliable pair (NF), in a controlled and limited manner such that the shifted threshold voltage remains within said common random distribution (DST) and so as to increase the difference between the effective threshold voltages beyond the margin value (MRG).

2. The device according to claim 1, wherein the differential read means (LECT) is further configured to read a logic state (DAT) of a pair of transistors materialised by a difference between the values of the effective threshold voltages of the pair greater than the margin value (MRG).

3. The device according to one of the preceding claims, wherein the write means (ECR) is configured to shift the effective threshold voltage (C2, El) of a transistor by generating hot carrier injection phenomenon conditions, so as to trap charges in a gate dielectric of the transistor (OTP1, OTP2).

4. The device according to claim 3, wherein the write means (ECR), for shifting the effective threshold voltage (C2, El) of a transistor, is configured to generate a sequence of write pulses (751) each comprising said hot carrier injection phenomenon conditions.

5. The device according to claim 4, wherein the differential read means (LECT) is configured to perform a margin check (752, 753) between at least some of said write pulses (751), the margin check comprising a comparison (753) of the difference of the values of the effective threshold voltages (752) of the pair of transistors with the margin value (MRG).

6. The device according to one of the preceding claims as combined with claim 2, wherein the logic states (DAT) of the set (ENS) of pairs of transistors are intended to form a random data stream.

7. An integrated circuit (CI), including a physically unclonable function device (DIS) according to claim 6 and an encryption device (CFR) configured to encrypt data (DNC) using a key (K), the key (K) comprising said random data stream.

8. A method comprising the implementation of a physically unclonable function, said implementation comprising:
- manufacturing (71) a set (ENS) of pairs (P) of transistors (OTP1, OTP2), intended to have the same threshold voltage;
- randomly dispersing (72) the effective values of the threshold voltages (Vteff) of the transistors forming a common random distribution (DST) of the threshold voltages of the transistors, logic states being obtained in a physically unclonable way by the random deviation of the values of the effective threshold voltages of the two transistors of a pair;
- measuring (73) the difference between the effective threshold voltages (Vteff) of the pairs of transistors, and identifying (74) pairs of transistors called unreliable pairs of transistors (NF) whose difference between the effective threshold voltages is less than a margin value (MRG);
- shifting (75) the effective threshold voltage (C2, El) of a transistor of each unreliable pair (NF), in a controlled and limited manner such that the shifted threshold voltage remains within said common random distribution (DST) and so as to increase the difference between the effective threshold voltages beyond the margin value (MRG).

9. The method according to claim 8, further comprising a reading (76) of a logic state (DAT) of a pair of transistors materialised by a difference between the values of the effective threshold voltages (Vteff) of the pair greater than the margin value (MRG).

10. The method according to one of claims 8 or 9, wherein said shift (71) of the effective threshold voltage (C2, El) of a transistor comprises a generation of hot carrier injection phenomenon conditions, and a trapping of the charges in a gate dielectric of the transistor (OTP1, OTP2).

11. The method according to claim 10, wherein said shifting (75) of the effective threshold voltage of one of the transistors comprises generating a sequence of write pulses (751) each comprising said hot carrier injection phenomenon conditions.

12. The method according to claim 11, wherein said definitive shift (75) comprises a margin check (752, 753) between at least some of the write pulses (751), the margin check comprising a measurement (752) of the difference in the values of the effective threshold voltages of the pair of transistors and a comparison (753) of the measured difference with the margin value (MRG).

13. The method according to one of claims 8 to 12 as combined with claim 10, wherein the logic states (DAT) of the set (ENS) of pairs of transistors are intended to form a random data stream.

14. An encryption method including an encryption (CFR) of data (DNC) using a key (K), the key (K) comprising a random data stream, the encryption method comprising obtaining the random data stream by a physically unclonable function method according to claim 13.
